# EUROPÄISCHE PATENTANMELDUNG

(11) **EP 2 557 337 A1**
(43) Veröffentlichungstag der Anmeldung: **13.02.2013**
(21) Anmeldenummer: 11176971.7
(22) Anmeldetag: 09.08.2011
(51) Int. Cl.: F16J 9/14, F16J 9/18, F16J 15/32

(54) **Bauelement**

(71) Anmelder: MTU Aero Engines GmbH, 80995 München (DE)
(72) Erfinder: Stiehler, Frank, 04924 Bad Liebenwerda (DE); Schellhorn, Lars, 07318 Saalfeld (DE)

(57) **Zusammenfassung**

Offenbart ist ein Bauelement 1, insbesondere ein Ring- oder Stabelement, mit einem Grundkörper 2, der zumindest einen mit einem weiteren Endabschnitt 6 verbindbaren Endabschnitt 4 aufweist, wobei ein erster Endabschnitt 4 einen Verriegelungsvorsprung 16 mit einer Führungsfläche 18 aufweist, die bezüglich einer Führungsebene 20 in Anlage an eine Führungsfläche 22 eines Führungsabschnitts 24 des zweiten Endabschnitts 6 bringbar ist und der zweite Endabschnitt 6 einen Verriegelungsvorsprung 26 mit einer Stützfläche 28 aufweist, die bezüglich der Führungsebene 20 in Anlage an eine Stützfläche 30 eines Führungsabschnitts 32 des ersten Endabschnitts 4 bringbar ist, wobei die Verriegelungsvorsprünge 16, 26 einander in einer Verriegelungsposition hintergreifen.

## Beschreibung

Die Erfindung betrifft ein Bauelement, insbesondere ein ringförmiges oder stabförmiges Bauelement, gemäß dem Oberbegriff des Patentanspruchs 1.

Als Dämpfungsring, Dichtring, Sicherungsring oder Kolbenring einer Maschine, insbesondere einer Turbomaschine, wie beispielsweise einer Fluggasturbine, ausgebildete Bauelemente sind aus dem allgemeinen Stand der Technik bekannt. Beispielsweise werden Dämpfungsringe im Verdichterbereich von Gasturbinen verwendet. Die Endabschnitte der Ringe können sich hierbei frei zueinander bewegen.

Aus der DE 2 255 019 A1 sind ferner Dichtungsringe mit einer Verriegelung der Endabschnitte in tangentialer Richtung bekannt. Die Ringenden werden hierbei axial ineinander geschoben und dadurch verbunden. Die Axialsicherung derartiger Dichtungsringe erfolgt in der Einbauposition aufgrund einer Anlage der Ringenden an den Seitenwandungen der Ringnut.

Nachteilig bei derartigen Bauelementen ist, dass es insbesondere aufgrund von Vibrationen der Endabschnitte zu einem Reibverschleiß (engl. Fretting) und einer Beschädigung am Einbauort sowie von angrenzenden Bauteilen kommen kann. Weiterhin nachteilig ist, dass sich die Bauelemente aufgrund einer fehlenden Axialsicherung und Vorspannung oder anderen Effekten aus ihrer Einbauposition lösen können.

Demgegenüber liegt der Erfindung die Aufgabe zugrunde, ein Bauelement zu schaffen, das sicher in seiner Einbauposition positionierbar ist und bei dem der Verschleiß und eine Beschädigung von Bauteilen im Bereich der Endabschnitte des Bauelements zumindest reduziert ist.

Diese Aufgabe wird mittels eines Bauelements mit den Merkmalen des Patentanspruchs 1 gelöst.

Das erfindungsgemäße Bauelement ist beispielsweise als Ring oder Stabelement ausgeführt und weist einen Grundkörper auf, der zumindest einen mit einem weiteren Endabschnitt verbindbaren Endabschnitt aufweist. Erfindungsgemäß ist ein erster Endabschnitt mit einem Verriegelungsvorsprung versehen, der eine Führungsfläche aufweist, die bezüglich einer Führungsebene in Anlage an eine Führungsfläche eines Führungsabschnitts des zweiten Endabschnitts bringbar ist, wobei der zweite Endabschnitt einen Verriegelungsvorsprung mit einer Stützfläche aufweist, die bezüglich der Führungsebene in Anlage an eine Stützfläche eines Führungsabschnitts des ersten Endabschnitts derart bringbar ist, dass die Verriegelungsvorsprünge einander in einer Verriegelungsposition hintergreifen. Dadurch wird eine formschlüssige Verbindung erreicht, die hohen Anforderungen an die Verbindung genügt. Es können mehrere Bauelemente einer Bauelementanordnung über zumindest einen Endabschnitt verbunden werden. Der zweite Endabschnitt kann hierbei an einem weiteren Bauelement, d.h. nicht an dem ersten Bauelement, vorgesehen sein. Das zumindest eine Bauelement kann sich, beispielsweise aufgrund von Vorspannung oder anderen Effekten, nicht aus seiner Einbauposition lösen. Ringe müssen nicht umfangsgesichert werden (z.B. wegen einem Fenster in der Lauffläche). Verschleiß und Beschädigungen des Bauteils dem das Bauelement zugeordnet ist, wie beispielsweise einem Verdichterrotor einer Fluggasturbine, sowie angrenzender Bauteile im Bereich der Endabschnitte, beispielsweise Schaufelplattformen von Verdichterschaufeln, sind aufgrund der definierten Verbindung der Enden, wie beispielsweise Ringenden, zumindest stark minimiert. Die Betriebssicherheit ist dadurch erheblich verbessert und eine höhere Lebensdauer wird erreicht.

Aufgrund der geführten Ringenden kann ein Ringelement, wie beispielsweise ein Dämpfungsring, in der Ringnut frei rotierend angeordnet sein. Ferner wird ein Verwinden der Ringenden mit den damit verbundenen Verschleißerscheinungen und Beschädigungen unterbunden. Vorteilhaft ist bei als Dämpfungsring ausgebildeten Bauelementen weiterhin, dass das Dämpfungsverhalten auch im Bereich der Ringenden im Wesentlichen unverändert ist, da sich die Dämpfungsmasse im Verbindungsbereich der Ringenden lediglich minimal verändert. Insgesamt wird daher eine Kostenoptimierung aufgrund der vereinfacht ausführbaren Bauteilumgebung ermöglicht.

Erfindungsgemäß wird es bevorzugt, wenn eine Auflagefläche des Verriegelungsvorsprungs des ersten Endabschnitts bezüglich einer Auflageebene in Anlage an eine Anlagefläche des zweiten Endabschnitts bringbar ist. Die Endabschnitte bzw. Verschlussenden des erfindungsgemäßen Bauelements sind dadurch bezüglich der Führungsebene und der Auflageebene geführt, so dass die Relativbewegung der Endabschnitte zueinander in allen Freiheitsgraden definiert ist. Aufgrund des Formschlusses sind die Enden vorzugsweise in der Tangentialebene und radial fixiert. Der Formschluss kann derart, beispielsweise durch Spiegelung/Symmetrie der Formelemente, ausgebildet sein, dass er optimal an die konstruktive Umgebung angepasst ist. Der Verschluss kann mittels eines zusätzlichen Bauteils, wie beispielsweise einer Lasche, in Umfangsrichtung sperrbar sein, bspw. durch Umbiegen der Lasche.

Als besonders vorteilhaft hat es sich erwiesen, wenn die Führungsebene einen Winkel im Bereich von etwa 90° zu der Auflageebene aufweist. Die Führungsebene kann erfindungsgemäß als eine Axialebene ausgeführt sein, die sich bei einem Ringelement senkrecht zu der Rotationsachse des Ringes erstreckt. Die Auflageebene erstreckt sich bei einem Ringelelement vorzugsweise als Tangentialebene in einem Winkel von 90° zu der Führungsebene.

Als Stabelemente ausgeführte Bauelemente können einfach oder mehrfach gekrümmt ausgebildet sein. Die Enden von zwei Stabelementen können erfindungsgemäß miteinander verbunden werden.

Gemäß einem besonders bevorzugten Ausführungsbeispiel der Erfindung sind die Endabschnitte des Bauelements aus einer geöffneten Position zur Herstellung der Verriegelungsposition ineinander einschwenkbar. Die Führungsflächen sind hierbei mittels einer Einschwenkbewegung in Anlage an die Stützflächen bringbar. Dadurch wird eine einfache Montage des Bauelements ohne Spezialwerkzeuge erreicht.

Die Verriegelungsvorsprünge sind in der Verriegelungsposition vorzugsweise in Umfangs- bzw. Längsrichtung des Grundkörpers hintereinander angeordnet, so dass neben der Verschlusswirkung eine kompakte Bauweise ermöglicht ist.

Bei einem bevorzugten Ausführungsbeispiel weist der Grundkörper einen etwa rechteckigen Querschnitt auf. Vorzugsweise erstrecken sich die Seitenflächen verbundener Enden in gemeinsamen Ebenen.

Vorzugsweise sind die Endabschnitte in Längsrichtung des Bauelements relativ zueinander in einem begrenzten Bereich verschiebbar. Die Verriegelungsvorsprünge können bei einem Ringelement hierbei einen Anschlag ausbilden, der die maximale Aufweitung des Ringelelements definiert begrenzt.

Bei einer Ausführungsform der Erfindung erstreckt sich die Längsrichtung der Verriegelungsvorsprünge im Wesentlichen parallel zu der Längsrichtung der Führungsabschnitte. Die Erstreckung der Längsrichtungen kann hierbei, insbesondere bei einem Ringelement, in Anpassung an die Ringkrümmung etwa bogenförmig gekrümmt sein.

Erfindungsgemäß wird es bevorzugt, wenn der zweite Endabschnitt eine benachbart zu dem Verriegelungsvorsprung angeordnete Auflagerfläche aufweist, die in Anlage an eine Gleitfläche des Führungsabschnitts des ersten Endabschnitts bringbar ist. Die Freiheitsgrade der Verbindung sind im geschlossenen Zustand der Verriegelung gemäß den Anforderungen an das Bauelement eingeschränkt.

Die Gleitfläche des ersten Endabschnitts des Bauelements ist vorzugsweise benachbart zu dessen Stützfläche angeordnet, wobei die Flächen einen Winkel im Bereich von etwa 90° zueinander aufweisen. Die Führungsanordnung ist dadurch äußerst kompakt ausgebildet.

Vorzugsweise hat der erste Endabschnitt des Bauelements eine benachbart zu dem Verriegelungsvorsprung angeordnete Anlegefläche, die in Anlage an eine Auflagerungsfläche des Führungsabschnitts des zweiten Endabschnitts bringbar ist.

Fertigungstechnisch und funktional ist es vorteilhaft, wenn der Grundkörper des Bauelements stufenförmig zu der Auflagerfläche des zweiten Endabschnitts hin zurückgesetzt ist. Bei Ringelementen ist die Auflagerfläche des zweiten Endabschnitts vorzugsweise stufenförmig radial zurückgesetzt ausgebildet.

Vorzugsweise ist der Grundkörper zusätzlich oder alternativ stufenförmig zu der Anlegefläche des ersten Endabschnitts hin zurückgesetzt. Die Anlegefläche ist bei Ringelementen bevorzugt stufenförmig radial zurückgesetzt ausgebildet.

In der Verriegelungsposition des Bauelements ist bei einer bevorzugten Erfindungsform ein Spalt zwischen Stirnflächen der Führungsabschnitte ausgebildet. Zusätzlich oder alternativ kann ferner ein Spalt zwischen Stirnflächen der Verriegelungsvorsprünge und dem Grundkörper ausgebildet sein. Die Endabschnitte sind hierbei derart miteinander verbunden, dass das Bauelement Führungen und Anschläge ausbildende Überlappungsbereiche aufweist. Insgesamt sind die Endabschnitte dadurch innerhalb eines definierten Bereiches relativ zueinander längsverschiebbar.

Zumindest ein Kantenbereich des Bauelements ist bei einer bevorzugten Ausführungsvariante der Erfindung mit Abrundungen, Übergangsradien und/oder Schrägflächen versehen. Die Schrägflächen oder Abrundungen können derart ausgebildet sein, dass der Endabschnitt keine verschleißfördernde, spitze Kantenberührung mit benachbarten Bauteilen, wie beispielsweise dem Nutgrund einer Ringnut zur Aufnahme eines Dämpfungsrings, aufweist. Dadurch werden Verschleiß und Beschädigungen am Bauelement und an dessen Kontaktpartnern weiter reduziert bzw. vermieden (Vermeidung von Wechselwirkungen).

Das erfindungsgemäße Bauelement kann vorteilhaft als Dämpfungsring, Dichtring, Sicherungsring und/oder Kolbenring einer Maschine, vorzugsweise einer Turbomaschine, wie beispielsweise einer Fluggasturbine, ausgeführt sein. Besonders geeignet ist das Bauteil für Wellenanwendungen bei einer Turbomaschine, wie beispielsweise einer Fluggasturbine.

Sonstige vorteilhafte Weiterbildungen der Erfindung sind Bestandteil der weiteren Unteransprüche.

Im Folgenden wird ein bevorzugtes Ausführungsbeispiel der Erfindung anhand schematischer Zeichnungen näher erläutert. Es zeigen:
Figur 1 eine Detaildarstellung eines als Dämpfungsring ausgebildeten erfindungsgemäßen Bauelements im Bereich der Ringenden;
Figur 2 eine Detaildarstellung des Dämpfungsrings aus Figur 1 mit geöffnetem Verschluss;
Figur 3 eine Detaildarstellung des Dämpfungsrings aus Figur 1 mit geschlossenem Verschluss;
Figur 4 eine weitere Detaildarstellung des Dämpfungsrings aus Figur 1 mit geöffnetem Verschluss und
Figur 5 eine weitere Detaildarstellung des Dämpfungsrings aus Figur 1 mit geschlossenem Verschluss.

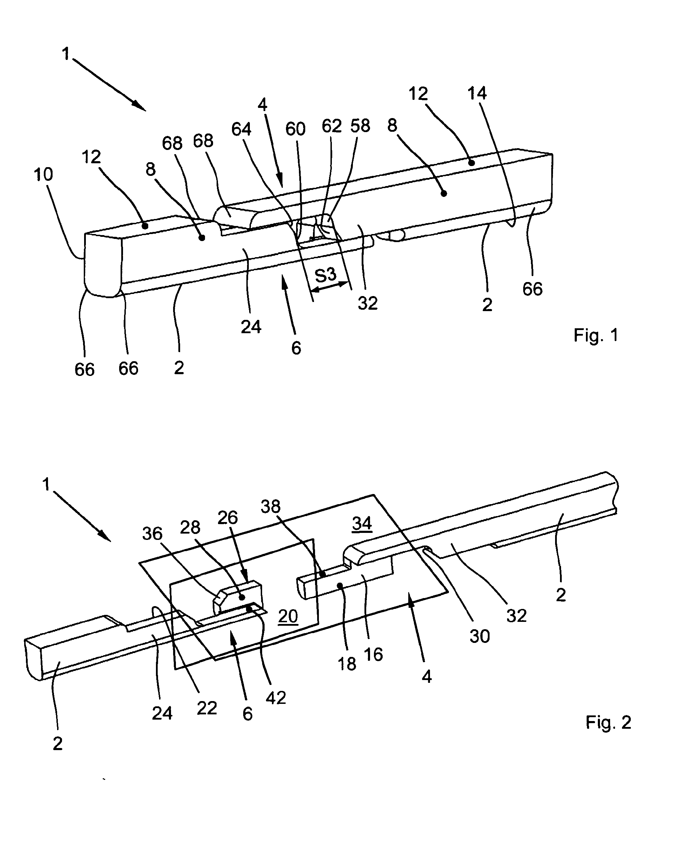

Figur 1 zeigt beispielhaft ein als Dämpfungsring ausgebildetes erfindungsgemäßes Bauelement 1 in einer Verriegelungsposition, das einen Grundkörper 2 mit zwei miteinander verbindbaren Endabschnitten 4, 6 aufweist. Der Grundkörper 2 hat einen etwa rechteckigen Querschnitt, wobei sich Seitenflächen 8, 10, 12, 14 der verbundenen Enden in gemeinsamen Ebenen erstrecken. Derartige Dämpfungsringe 1 werden insbesondere im Bereich eines Hochdruckverdichters einer Fluggasturbine eingesetzt.

Wie insbesondere Figur 2 zu entnehmen ist, die eine Detaildarstellung des Dämpfungsrings 1 aus Figur 1 in seiner geöffneten Position zeigt, ist ein erster Endabschnitt 4 des Dämpfungsrings 1 mit einem Verriegelungsvorsprung 16 versehen, der eine Führungsfläche 18 aufweist. Die Führungsfläche 18 ist bezüglich einer schematisch dargestellten Führungsebene 20 in Anlage an eine Führungsfläche 22 eines Führungsabschnitts 24 des zweiten Endabschnitts 6 bringbar (vgl. Figur 1). Der zweite Endabschnitt 6 weist einen Verriegelungsvorsprung 26 mit einer Stützfläche 28 auf, die bezüglich der Führungsebene 20 in Anlage an eine Stützfläche 30 eines Führungsabschnitts 32 des ersten Endabschnitts 4 bringbar ist. Die Längsrichtung der Verriegelungsvorsprünge 16, 26 erstreckt sich hierbei parallel zu der Längsrichtung der Führungsabschnitte 24, 32. Der Verriegelungsvorsprung 26 ist auf einer von dem freien Ende entfernten Stirnseite mit einer Schrägfläche 36 versehen. Die Verriegelungsvorsprünge 16, 26 hintergreifen einander in einer Verriegelungsposition gemäß Figur 1. Die Führungsebene 20 weist einen Winkel von etwa 90° zu einer Auflageebene 34 auf und ist als mittige Axialebene ausgeführt, die sich senkrecht zu der Rotationsachse des Ringes 1 erstreckt. Die Endabschnitte 4, 6 bzw. Verschlussenden des Dämpfungsrings 1 sind dadurch bezüglich der Führungsebene 20 und der Auflageebene 34 geführt, so dass die Relativbewegung der Endabschnitte 4, 6 zueinander definiert ist. Die Endabschnitte 4, 6 des Dämpfungsrings 1 sind aus der dargestellten, geöffneten Position zur Herstellung der Verriegelungsposition gemäß Figur 1 ineinander einschwenkbar. Die Führungsflächen 18, 22 sind hierbei mittel einer Einschwenkbewegung in Anlage bringbar. Über die Schwenkbewegung sind ebenfalls die Stützflächen 28, 30 miteinander in Anlage bringbar. Die Führungsabschnitte 24, 32 ergänzen sich in der Breite jeweils mit den Verriegelungsvorsprüngen 16, 26 zu einer Gesamtbreite, die im Wesentlichen der Breite des Grundkörpers 2 entspricht. Bei dem dargestellten Ausführungsbeispiel sind die Führungsabschnitte 24, 32 etwa gleich breit wie die Verriegelungsvorsprünge 16, 26.

Insgesamt wird dadurch eine formschlüssige Verbindung erreicht, die hohen Anforderungen an die Verbindung genügt. Verschleiß und Beschädigungen des Bauteils dem der Dämpfungsrings zugeordnet ist, wie beispielsweise einem Verdichterrotor einer Fluggasturbine, sowie angrenzender Bauteile im Bereich der Endabschnitte 4, 6, beispielsweise Schaufelplattformen von Verdichterschaufeln, sind aufgrund der definierten Führung der Ringenden 4, 6 zumindest stark minimiert. Aufgrund der geführten Ringenden 4, 6 kann der Dämpfungsring 1 ferner in einer nicht dargestellten Ringnut frei rotierend angeordnet sein. Der Dämpfungsring 1 kann sich hierbei im Betrieb nicht aus seiner Einbauposition lösen. Die Betriebssicherheit ist dadurch erheblich verbessert und eine höhere Lebensdauer wird erreicht.

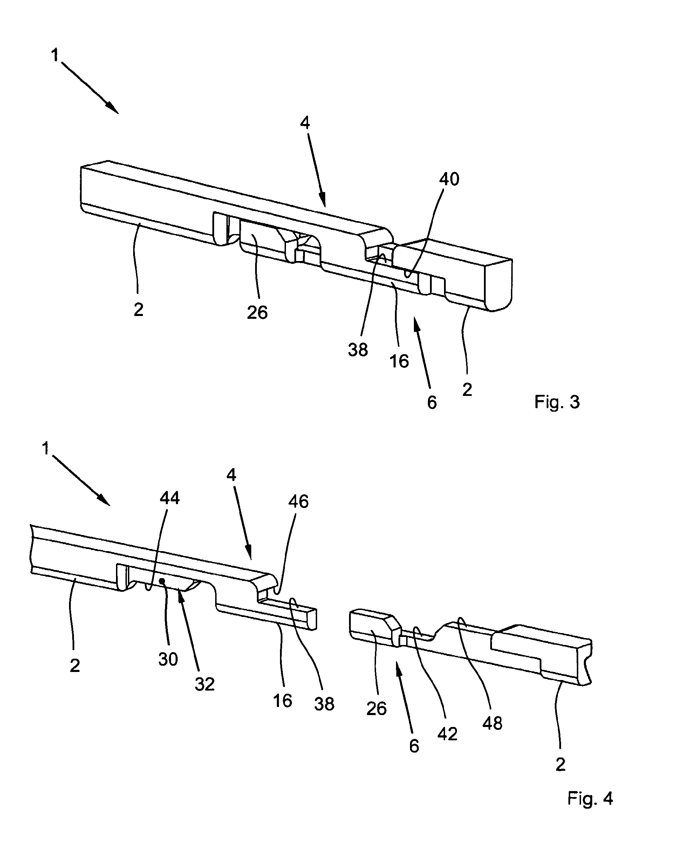

Gemäß Figur 3, die eine weitere Detaildarstellung des Dämpfungsrings 1 aus Figur 1 zeigt, ist eine Auflagefläche 38 des Verriegelungsvorsprungs 16 des ersten Endabschnitts 4 in der Verriegelungsposition des Verschlusses in Anlage an einer Anlagefläche 40 des zweiten Endabschnitts 6. Die Verriegelungsvorsprünge 16, 26 sind in der Verriegelungsposition in Umfangs- bzw. Längsrichtung hintereinander angeordnet, so dass eine sichere Verriegelung bei kompakter Bauweise ermöglicht ist. Die Endabschnitte 4, 6 sind dadurch in Längsrichtung relativ zueinander in einem definierten, begrenzten Bereich verschiebbar.

Wie Figur 4 zu entnehmen ist, die eine weitere Detaildarstellung des Dämpfungsrings 1 aus Figur 1 mit geöffnetem Verschluss zeigt, weist der zweite Endabschnitt 6 eine benachbart zu dem Verriegelungsvorsprung 26 angeordnete Auflagerfläche 42 auf, die in Anlage an eine radial unten vorgesehene Gleitfläche 44 des Führungsabschnitts 32 des ersten Endabschnitts 4 bringbar ist. Die Gleitfläche 44 ist benachbart zu dessen Stützfläche 30 angeordnet, wobei die Flächen 30, 44 einen Winkel von 90° zueinander aufweisen. Die Führungsanordnung ist dadurch äußerst kompakt ausgebildet. Der erste Endabschnitt 4 hat ferner eine benachbart zu dem Verriegelungsvorsprung 16 angeordnete Anlegefläche 46, die in Anlage an eine Auflagerungsfläche 48 des Führungsabschnitts 24 des zweiten Endabschnitts 6 bringbar ist. Der Grundkörper 2 des Dämpfungsrings 1 ist radial, stufenförmig zu der Auflagerfläche 48 hin zurückgesetzt. Ferner ist der Grundkörper 2 radial, stufenförmig zu der Auflagefläche 38 des ersten Endabschnitts 4 hin zurückgesetzt.

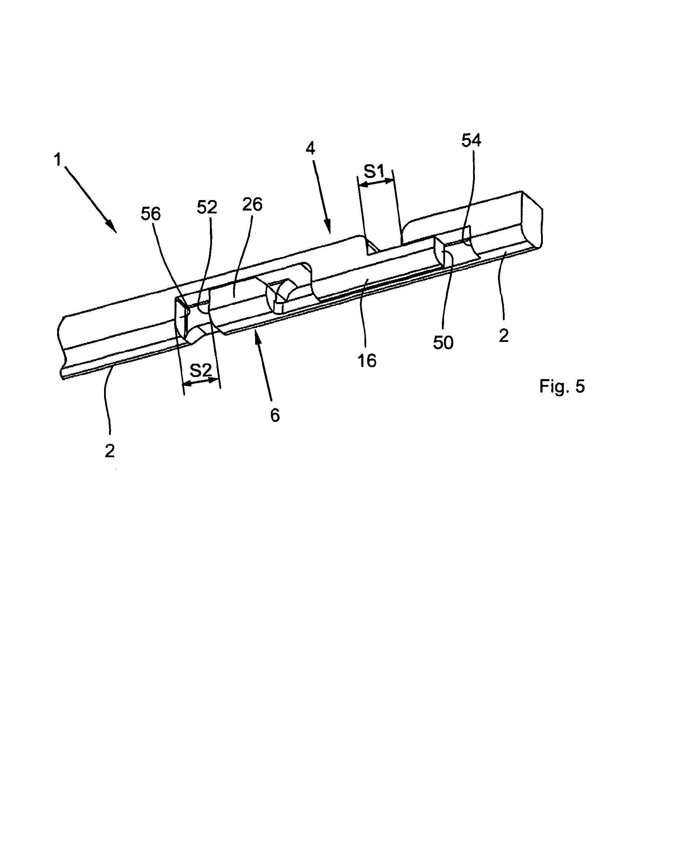

Gemäß Figur 5, die eine weitere Detaildarstellung des Dämpfungsrings 1 zeigt, ist in der Verriegelungsposition jeweils ein Spalt S1, S2 zwischen Stirnflächen 50, 52 der Verriegelungsvorsprünge 16, 26 und Flächen 54, 56 des Grundkörpers 2 ausgebildet.

Wie insbesondere aus Figur 1 ersichtlich, ist ferner ein Spalt S3 zwischen Stirnflächen 58, 60 der benachbart angeordneten Führungsabschnitte 24, 32 der Ringenden 4, 6 ausgebildet. Die Stirnflächen 58, 60 sind mit Schrägflächen 62, 64 versehen, so dass Reibverschleiß in diesem Bereich minimiert ist. Die Endabschnitte 4, 6 sind derart miteinander verbunden, dass der Dämpfungsring 1 Führungen und Anschläge ausbildende Überlappungsbereiche aufweist. Insgesamt sind die Endabschnitte 4, 6 dadurch innerhalb eines definierten Bereiches relativ zueinander längsverschiebbar. Ein radial innenliegender, nutseitiger Bereich des Dämpfungsrings 1 ist im Kantenbereich mit Abrundungen 66 versehen, die neben dem Grundkörper 2 auch im Bereich der Endabschnitte 4, 6 ausgebildet sind. Die Abrundungen 66 sind derart ausgebildet, dass die Endabschnitte 4, 6 keine verschleißfördernde, spitze Kantenberührung mit benachbarten Bauteilen, wie beispielsweise dem Nutgrund einer Ringnut zur Aufnahme des Dämpfungsrings 1, aufweisen. Stirnkanten des Grundkörpers im Bereich der Endabschnitte sind hierzu ebenfalls mit Abrundungen 68 versehen. Dadurch werden Verschleiß und Beschädigungen am Dämpfungsring 1 und an dessen Kontaktpartnern weiter reduziert bzw. vermieden.

Die Erfindung ist nicht auf derartige Dämpfungsringe 1 beschränkt, vielmehr können die Bauelemente vorteilhaft als ringförmige oder stabförmige, geradlinige oder gekrümmte Bauelemente für andere Anwendungen verwendet werden.

Offenbart ist ein Bauelement 1, insbesondere ein Ring- oder Stabelement, mit einem Grundkörper 2, der zumindest einen mit einem weiteren Endabschnitt 6 verbindbaren Endabschnitt 4 aufweist, wobei ein erster Endabschnitt 4 einen Verriegelungsvorsprung 16 mit einer Führungsfläche 18 aufweist, die bezüglich einer Führungsebene 20 in Anlage an eine Führungsfläche 22 eines Führungsabschnitts 24 des zweiten Endabschnitts 6 bringbar ist und der zweite Endabschnitt 6 einen Verriegelungsvorsprung 26 mit einer Stützfläche 28 aufweist, die bezüglich der Führungsebene 20 in Anlage an eine Stützfläche 30 eines Führungsabschnitts 32 des ersten Endabschnitts 4 bringbar ist, wobei die Verriegelungsvorsprünge 16, 26 einander in einer Verriegelungsposition hintergreifen.

### Bezugszeichenliste

- 1: Bauelement
- 2: Grundkörper
- 4: Endabschnitt
- 6: Endabschnitt
- 8: Seitenfläche
- 10: Seitenfläche
- 12: Seitenfläche
- 14: Seitenfläche
- 16: Verriegelungsvorsprung
- 18: Führungsfläche
- 20: Führungsebene
- 22: Führungsfläche
- 24: Führungsabschnitt
- 26: Verriegelungsvorsprung
- 28: Stützfläche
- 30: Stützfläche
- 32: Führungsabschnitt
- 34: Auflageebene
- 36: Schrägfläche
- 38: Auflagefläche
- 40: Anlagefläche
- 42: Auflagerfläche
- 44: Gleitfläche
- 46: Anlegefläche
- 48: Auflagerungsfläche
- 50: Stirnfläche
- 52: Stirnfläche
- 54: Fläche
- 56: Fläche
- 58: Stirnfläche
- 60: Stirnfläche
- 62: Schrägfläche
- 64: Schrägfläche
- 66: Abrundung
- 68: Abrundung

## Patentansprüche

1. Bauelement, insbesondere ringförmiges oder stabförmiges Bauelement, mit einem Grundkörper (2), der zumindest einen mit einem weiteren Endabschnitt (6) verbindbaren Endabschnitt (4) aufweist, **dadurch gekennzeichnet, dass** ein erster Endabschnitt (4) einen Verriegelungsvorsprung (16) mit einer Führungsfläche (18) aufweist, die bezüglich einer Führungsebene (20) in Anlage an eine Führungsfläche (22) eines Führungsabschnitts (24) des zweiten Endabschnitts (6) bringbar ist und dass der zweite Endabschnitt (6) einen Verriegelungsvorsprung (26) mit einer Stützfläche (28) aufweist, die bezüglich der Führungsebene (20) in Anlage an eine Stützfläche (30) eines Führungsabschnitts (32) des ersten Endabschnitts (4) bringbar ist, wobei die Verriegelungsvorsprünge (16, 26) einander in einer Verriegelungs-position hintergreifen.

2. Bauelement nach Anspruch 1, wobei eine Auflagefläche (38) des Verriegelungsvorsprungs (16) des ersten Endabschnitts (4) bezüglich einer Auflageebene (34) in Anlage an eine Anlagefläche (40) des zweiten Endabschnitts (6) bringbar ist.

3. Bauelement nach Anspruch 1 oder 2, wobei die Endabschnitte (4, 6) aus einer geöffneten Position zur Herstellung der Verriegelungsposition ineinander einschwenkbar sind.

4. Bauelement nach einem der vorhergehenden Ansprüche, wobei die Verriegelungsvorsprünge (16, 26) in der Verriegelungsposition in Umfangs- bzw. Längsrichtung des Grundkörpers (2) hintereinander angeordnet sind.

5. Bauelement nach einem der vorhergehenden Ansprüche, wobei die Führungsebene (20) eine Axialebene ist.

6. Bauelement nach einem der vorhergehenden Ansprüche, wobei sich die Längsrichtungen der Verriegelungsvorsprünge (16, 26) und/oder der Führungsabschnitte (24, 32) im Wesentlichen parallel zueinander erstrecken.

7. Bauelement nach einem der vorhergehenden Ansprüche, wobei der zweite Endabschnitt (6) eine benachbart zu dem Verriegelungsvorsprung (26) angeordnete Auflagerfläche (42) aufweist, die in Anlage an eine Gleitfläche (44) des Führungsabschnitts (32) des ersten Endabschnitts (4) bringbar ist.

8. Bauelement nach Anspruch 7, wobei die Gleitfläche (44) benachbart zu dessen Stützfläche (30) angeordnet ist und die Flächen (30, 44) einen Winkel im Bereich von etwa 90° zueinander aufweisen.

9. Bauelement nach einem der vorhergehenden Ansprüche, wobei der erste Endabschnitt (4) eine benachbart zu dem Verriegelungsvorsprung (16) angeordnete Anlegefläche (46) aufweist, die in Anlage an eine Auflagerungsfläche (48) des Führungsabschnitts (24) des zweiten Endabschnitts (6) bringbar ist.

10. Bauelement nach Anspruch 9, wobei der Grundkörper (2) stufenförmig zu der Auflagerfläche (42) hin, zu der Auflagerungsfläche (48) hin und/oder zu der Auflagefläche (38) hin, insbesondere radial, zurückgesetzt ist.

11. Bauelement nach einem der vorhergehenden Ansprüche, wobei in der Verriegelungsposition ein Spalt (S3) zwischen Stirnflächen (58, 60) der Führungsabschnitte (24, 32) und/oder ein Spalt (S1, S2) zwischen Stirnflächen (50, 52) der Verriegelungsvorsprünge (16, 26) und dem Grundkörper (2) ausgebildet ist.

12. Bauelement nach einem der vorhergehenden Ansprüche, ausgebildet als Dämpfungsring, Dichtring, Sicherungsring und/oder Kolbenring einer Maschine, insbesondere einer Turbomaschine, besonders bevorzugt einer Fluggasturbine.
